# EUROPÄISCHE PATENTANMELDUNG

(11) **EP 4 461 588 A1**
(43) Veröffentlichungstag der Anmeldung: **13.11.2024**
(21) Anmeldenummer: 24000044.8
(22) Anmeldetag: 16.04.2024
(51) Int. Cl.: B60L 53/16, G01K 1/14, G01K 1/143, G01K 1/16, H01R 13/66

(54) **LADESTECKER**

(30) Priorität: 12.05.2023 DE 102023112618
(71) Anmelder: HARTING Automotive GmbH, 32339 Espelkamp (DE)
(72) Erfinder: Frerking, Malte, 49448 Brockum (DE); Niehaus, Mareike, 49401 Damme (DE); Beimdieck, Carsten, 49479 Ibbenbüren (DE)

(57) **Zusammenfassung**

Die Erfindung betrifft einen Ladestecker (100), insbesondere einen Schnellladestecker, zum Aufladen einer Batterie, insbesondere einer Traktionsbatterie eines Elektrofahrzeugs. Der erfindungsgemäße Ladestecker (100) weist dazu wenigstens einen Leistungskontakt (13) auf, welcher dazu ausgebildet ist, Strom an die Batterie zu übertragen, wobei der Leistungskontakt (13) eine Kontaktfahne (135) aufweist. Weiterhin ist im Ladestecker (100) ein Kontaktträger (16) vorgesehen, in dem der Leistungskontakt (13) zumindest teilweise angeordnet ist, wobei insbesondere ein Kontaktabschnitt (131) des Leistungskontaktes (13) aus dem Kontaktträger (16) herausragt. Ferner weist der Ladestecker (100) erfindungsgemäß wenigstens einen Sensorträger (134) auf, welcher dazu ausgebildet ist, einen Sensor (17), insbesondere einen Temperatursensor, in einer dafür vorgesehenen Tasche (134a) aufzunehmen und derart ausgebildet und angeordnet ist, dass der Sensor (17) in einem definierten Abstand zum Leistungskontakt (13) positioniert ist.

## Beschreibung

Die Erfindung betrifft einen Ladestecker, insbesondere einen Schnellladestecker, zum Aufladen einer Batterie, insbesondere einer Traktionsbatterie eines Elektrofahrzeugs. Weiterhin betrifft die Erfindung eine Ladesäule aufweisend einen erfindungsgemäßen Ladestecker.

### Stand der Technik

Zum Aufladen von Traktionsbatterien in E-Autos sind im Stand der Technik unterschiedliche Formen von Ladestecker bekannt. Hierbei sind insbesondere der in USA und Japan weit verbreitete und durch Normen definierte Typ-1-Stecker sowie der in Europa normativ definierte und vorherrschende Typ-2-Stecker zu nennen, wobei beide Anschlussarten für das Laden mit Dreh- bzw. Wechselstrom entwickelt wurden.

Für höhere Ladeleistungen und damit verbundenen kürzeren Ladestopps der Fahrzeuge wird jedoch ein Ladeanschluss mit Gleichstrom benötigt. Der eigentliche Stromfluss wird dabei über Leistungskontakte sichergestellt, während zwei weitere Kontakte als Kommunikationskontakte (Contact Pilot CP und Proximity Pilot PP) vorgesehen sind, über welche das Elektroauto mit dem Ladepunkt (Ladesäule) kommuniziert. Dabei werden Informationen zum Ladevorgang und der maximale Ladestrom übermittelt. Ferner ist ein Schutzkontakt (PE "Erdung") vorgesehen, der mit einer geerdeten Schutzleitung verbunden ist. Im Rahmen der Anmeldung wird unter dem Begriff Leistungskontakt derjenige Kontakt verstanden, über welchen der Strom für den eigentlichen Ladevorgang der zu ladenden Batterie fließt. Der Leistungskontakt ist dabei nicht auf Ladeanschlüsse mit Gleichstrom beschränkt, sondern beschreibt ebenfalls die entsprechenden Kontakte von Steckverbindungen mit anderen Stromarten wie Dreh- oder Wechselstrom.

Das Gleichstromladen ist dabei sowohl über Typ-1-Stecker als auch Typ-2-Stecker möglich, wobei sich insbesondere CCS-Stecker (Combined Charging System) durchgesetzt haben, über welche das Gleichstromladen durchgeführt werden kann. Diese entsprechen weitestgehend den Typ-1-bzw. Typ-2-Steckern, wobei sie lediglich über die Kommunikationskontakte und den Schutzkontakt des Schutzleiters der herkömmlichen Typ-1 bzw. Typ-2-Stecker verfügen und zusätzlich zwei große Leistungskontakte für den Gleichstrom aufweisen. Dadurch kann mit einer entsprechend am Fahrzeug vorgesehenen Ladedose sowohl mit dem Typ-1 bzw. Typ-2-Stecker, als auch mit CCS geladen werden. Gleichstromladestecker weisen normierte Befestigungselemente (Verriegelungen) zur Befestigung des Steckers am Fahrzeug während dem Ladevorgang auf, welche eine ungewollte Trennung des Steckers verhindern. Während Typ-1-Stecker ein vom Benutzer bedienbares Hebelelement zur Herstellung eines Formschlusses aufweisen, wird die Verriegelung bei Typ-2-Stecker durch fahrzeugseitig angeordnete Aktuatoren, welche im gekoppelten Zustand in dafür vorgesehene Aussparungen des Steckers einrasten, umgesetzt.

Aufgrund der hohen Ladeleistung beim Laden mit Gleichstrom muss sowohl der Ladestrom, die Ladespannung, die Verriegelung des Steckers als auch weitere Parameter wie die Temperatur der Leistungskontakte überwacht werden. Zur Überwachung der Temperatur werden dazu entsprechende Sensoren im Ladestecker vorgesehen. Die Sensoren sind dabei in einem Kontaktträger, in welchem die Kontakte zumindest teilweise befestigt und in ihrer Position fixiert werden, angeordnet. Dabei kommt es bei Systemen gemäß dem Stand der Technik beispielsweise aufgrund geänderter Umgebungsbedingungen häufig zu starken Messungenauigkeiten. Dies hat zur Folge, dass ein Ladevorgang beispielsweise zu spät oder zu früh abgebrochen wird, was den Ladevorgang behindert und verkompliziert.

### Aufgabenstellung

Vor dem geschilderten Hintergrund des Stands der Technik ist es somit Aufgabe der vorliegenden Erfindung, einen Ladestecker und eine Ladesäule bereit zu stellen, bei dem die Sensorgenauigkeit verbessert werden kann, um den Ladevorgang zu verbessern.

Diese Aufgabe wird durch die Gegenstände der unabhängigen Ansprüche gelöst. Vorteilhafte Ausführungsformen der Erfindung sind in den Unteransprüchen enthalten.

Der erfindungsgemäße Ladestecker zum Aufladen einer Batterie weist dazu wenigstens einen Leistungskontakt auf, welcher dazu ausgebildet ist, Strom an die Batterie zu übertragen, wobei der Leistungskontakt eine Kontaktfahne aufweist. Als Kontaktfahne wird im Rahmen der Anmeldung der Abschnitt eines Kontakts bezeichnet, welcher mittelbar oder unmittelbar zur elektrischen Verbindung mit einem Kabel vorgesehen ist. Weiterhin ist im Ladestecker ein Kontaktträger vorgesehen, in dem der Leistungskontakt zumindest teilweise angeordnet ist, wobei insbesondere ein Kontaktabschnitt des Leistungskontaktes aus dem Kontaktträger herausragt. Ferner weist der Ladestecker erfindungsgemäß wenigstens einen Sensorträger auf, welcher dazu ausgebildet ist, einen Sensor, insbesondere einen Temperatursensor, in einer dafür vorgesehenen Tasche aufzunehmen und derart ausgebildet und angeordnet ist, dass der Sensor in einem definierten Abstand zur Leistungskontakt positioniert ist.

Durch den erfindungsgemäßen Ladestecker ist eine exakte und unveränderliche Positionierung des Sensors in einem definierten Abstand zum Leistungskontakt möglich. Durch die Verwendung eines Sensorträgers kann der Abstand des Sensors zum Leistungskontakt bestmöglich reduziert werden. Auf diese Weise kann die Messung der Temperatur der Leistungskontakte deutlich zuverlässiger und mit geringerer Fehlerabweichung erfolgen.

Vorzugsweise weist der Ladestecker wenigstens eine Schweißfahne auf, welche an der Kontaktfahne des Leistungskontakts befestigt ist und dazu ausgebildet ist, einen elektrisch leitenden Kontakt zwischen einem Leistungskabel des Ladesteckers und dem Leistungskontakt herzustellen.

In einer vorteilhaften Ausführungsform der Erfindung ist der Sensorträger an dem Leistungskontakt selbst, insbesondere an der Kontaktfahne befestigt. Vorzugsweise erfolgt die Befestigung des Sensorträgers am Leistungskontakt bzw. an der Kontaktfahne durch einen Formschluss, der insbesondere bevorzugt durch die Sensorfahne umschließende Rastnasen des Sensorträgers gebildet ist. Durch die Befestigung des Sensors am Leistungskontakt durch den Sensorträger verändert sich somit auch bei einer leichten Bewegung des Leistungskontakts nicht die Entfernung zwischen Sensor und Leistungskontakt, wodurch die Messqualität verbessert werden kann. Durch einen Formschluss, insbesondere mit Rastnasen, kann eine einfach auszulegende und herzustellende Möglichkeit geschaffen werden den Sensorträger am Leistungskontakt zu befestigen. Als Rastnasen sind dabei flexible, den Leistungskontakt bzw. die Kontaktfahne teilweise umschließende Abschnitte zu verstehen, welche ein Rastierungselement aufweisen, das in einen entsprechend gegengleich geformten Abschnitt einrastet, um so einen Formschluss zu bilden. Der Formschluss kann vorzugsweise, insbesondere durch Entfernung der Rastnasen vom Leistungskontakt bzw. der Kontaktfahne, wieder aufgehoben werden. Somit kann der Sensorträger am Leistungskontakt angeclipst werden. Durch die Befestigung des Sensorträgers am Leistungskontakt selbst, wird sichergestellt, dass ein Abstand zwischen Sensor und Leistungskontakt möglichst gering ist.

In einer weiterhin bevorzugten Ausführungsform der Erfindung ist der Sensorträger derart ausgebildet und angeordnet, dass der Sensor direkt mit dem Leistungskontakt, insbesondere der Kontaktfahne in Kontakt steht und dieses somit berührt. Auf diese Weise kann direkt die Temperatur des Leistungskontakts ermittelt werden. Vorzugsweise weist der Sensor dazu eine Oberfläche auf, welche zum einen die erforderliche thermische Widerstandsfähigkeit aufweist und zum anderen nicht elektrisch leitend ist.

In einer anderen bevorzugten Ausführungsform der Erfindung ist der Sensorträger derart angeordnet und ausgebildet, dass er sich zwischen dem Sensor und dem Leistungskontakt, insbesondere der Kontaktfahne, erstreckt. Besonders bevorzugt ist dabei der Zwischenraum zwischen Sensor und Leistungskontakt vollständig durch den Sensorträger ausgefüllt. Auf diese Weise kann nicht nur die Position des Sensors klar definiert werden, sondern ebenfalls das zwischen dem Sensor und der Leistungsfahne vorhandene Material, wodurch die Qualität der Messung gesteigert werden kann.

Weiterhin bevorzugt ist eine Ausführungsform der Erfindung, bei der der Sensor durch einen Formschluss in der Tasche des Sensorträgers angeordnet ist. Hierzu ist vorzugsweise ein den Formschluss bildendes Rastelement vorgesehen, welches den Sensor umfasst.

Vorzugsweise erfolgt die Befestigung des Leistungskontakts in dem Kontaktträger durch eine im Kontaktträger verschraubte Halteklammer, welche vorzugsweise eine dafür vorgesehene Nut im Leistungskontakt zumindest teilweise umfasst. Durch die Halteklammer kann eine einfach zu konstruierende und herzustellende Befestigungsmöglichkeit sichergestellt werden, welche eine eindeutige Positionierung des Leistungskontakts ermöglicht.

In einer weiterhin bevorzugten Ausführungsform der Erfindung ist der Kontaktträger durch eine Vergussmasse ausgespritzt, welche die im Kontaktträger angeordneten Elemente fixiert, wobei der Sensorträger mit dem Sensor ebenfalls innerhalb des Kontaktträgers angeordnet ist. Als Elemente sind dabei Kontakte, Sensorhalter, die mit den Kontakten verbundenen Litzen bzw. Kabel, die Schweißfahne des Leistungskontakts und ähnliches zu verstehen. Durch das Vergießen einer Vergussmasse innerhalb des Kontaktträgers kann zum einen eine Fixierung des Sensors und des Leistungskontakts garantiert werden, sodass sich der Abstand zwischen ihnen nicht ändert und konstant bleibt, wodurch die Erfassung korrekter Messergebnisse gesichert werden kann. Zum anderen wird durch die Vergussmasse der Kontaktträger so mit Material ausgefüllt, sodass keine Luftkammern mehr im Kontaktträger vorliegen, welche die Temperaturmessung beeinflussen könnten. Die Qualität und Zuverlässigkeit der Messung können somit weiter verbessert werden.

Zudem kann durch das Vergießen einer Vergussmasse sichergestellt werden, dass die elektrisch leitenden Kontakte und alle anderen Elemente im Kontaktträger vor Feuchtigkeit geschützt sind.

Eine erfindungsgemäße Ladesäule weist erfindungsgemäß einen Ladestecker auf. Als Ladesäule ist dabei im Rahmen der Anmeldung alle Formen unterschiedlicher Ladepunkte für ein Elektrofahrzeug zu verstehen.

Die Erfindung ist dabei nicht auf einen Ladestecker zum Laden einer Traktionsbatterie eines Fahrzeugs begrenzt, ist jedoch insbesondere dazu vorgesehen. Ferner ist die Erfindung nicht auf einen Ladestecker für Gleichstrom begrenzt, auch wenn dies aufgrund der höheren übertragenen Leistung den vermutlich häufigsten Anwendungsfall darstellt. Es ist ebenso möglich als Leistungskontakt einen Kontakt beispielsweise für die Übertragung von Wechselstrom oder Drehstrom vorzusehen.

### Ausführungsbeispiel

Im Folgenden werden vorteilhafte Aspekte und Ausführungsformen der vorliegenden Erfindung unter Bezugnahme auf die beiliegenden Figuren näher erläutert. Sie zeigen:
- Fig. 1a: zeigt eine Ausführungsform eines erfindungsgemäßen Ladesteckers 100 in einer Explosionsdarstellung
- Fig. 1b: zeigt die in Fig. 1a gezeigte Ausführungsform des erfindungsgemäßen Ladesteckers 100 in einer Detailansicht
- Fig. 2: zeigt einen Kontaktträger 16 der in Fig. 1 gezeigten Ausführungsform des Ladesteckers 100 in einer Detailansicht
- Fig. 3a: zeigt einen Leistungskontakt 13 der in Fig. 1a gezeigten Ausführungsform des Ladesteckers 100 in einer Detailansicht
- Fig. 3b: zeigt den in Fig. 3b gezeigten Leistungskontakt 13 in einer weiteren Detailansicht
- Fig. 4: zeigt einen Sensorträger 134 in einer Detailansicht

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein. Richtungsangaben wie beispielsweise "links", "rechts", "oben" und "unten" sind mit Bezug auf die jeweilige Figur zu verstehen und können in den einzelnen Darstellungen gegenüber dem dargestellten Objekt variieren.

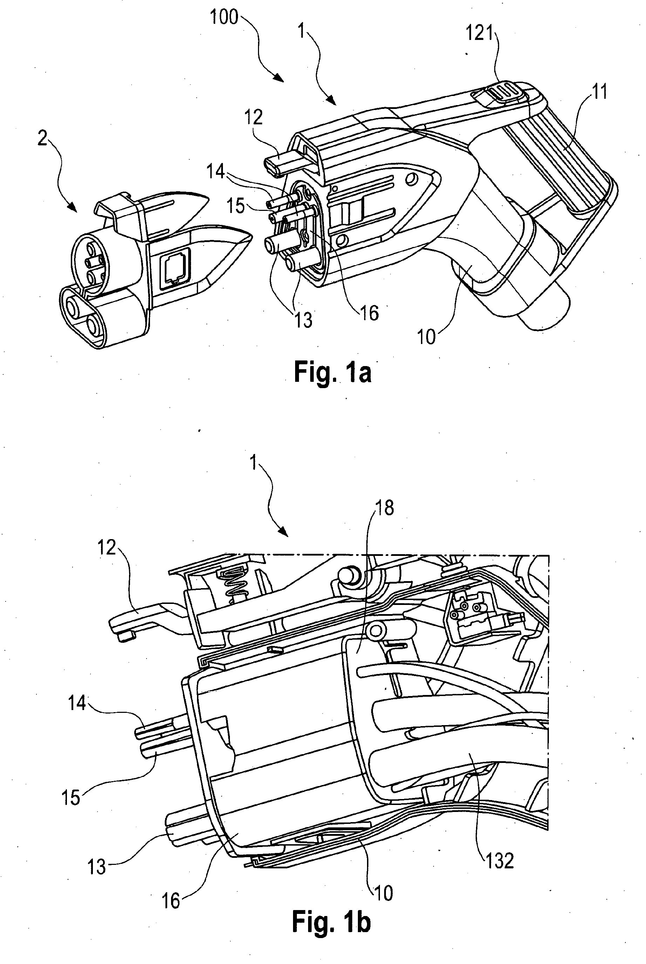

Fig. 1a zeigt eine Ausführungsform eines erfindungsgemäßen Ladesteckers 100 in einer Explosionsdarstellung. Der Ladestecker 100 weist dabei einen Steckkörper 1 und ein Steckgesicht 2 auf, wobei das Steckgesicht 2 auf den Steckkörper 1 gesteckt und mittels Formschluss daran befestigt wird, um den Ladestecker 100 zu bilden. Das Steckgesicht 2 ist dabei austauschbar. Der Steckkörper 1 weist ein Gehäuse 10 mit einem Griff 11 auf. An dem Griff 11 kann eine Gummierung vorgesehen sein, um den Komfort bei der Bedienung zu erhöhen. Weiterhin sind zwei Leistungskontakte 13 für eine Schnellladung einer Batterie eines Elektroautos durch Gleichstrom vorgesehen. Zudem ist ein Schutzkontakt 15 und zwei Kommunikationskontakte 14 vorgesehen, welche zu Ladung der Batterie notwendig sind. Die Kontakte 13, 14, 15 stehen aus einem Kontaktträger 16 hervor, welcher im Steckkörper 1 vorgesehen ist, und werden durch entsprechende Aufnahmen im Steckgesicht 2 aufgenommen.

In Fig. 1a und 1b ist dabei ein sogenannter CCS-Typ-1-Stecker dargestellt, welcher also der Normung der USA entspricht, wie eingangs erwähnt. Um eine feste Verbindung zwischen Ladestecker 1 und der entsprechenden Steckeraufnahme im Fahrzeug sicherzustellen, welche sich nicht ungewollt während des Ladevorgangs löst, ist ein Sicherungsmechanismus 12 vorgesehen, welcher ein Rastelement aufweist, der in ein entsprechendes Gegenstück in der Steckeraufnahme eingreift und nur durch den Benutzer gelöst werden kann, indem dieser das Entsicherungselement 121 in Form eines Knopfes in der Nähe des Griffs betätigt und somit das Rastelement aus dem entsprechenden Gegenstück der Steckeraufnahme löst.

Es sei an dieser Stelle darauf hingewiesen, dass die Erfindung nicht auf ein Ladestecker des Typs 1 begrenzt ist. Es sind andere Ausführungsformen der Erfindung denkbar mit Ladesteckern eines anderen Typs, wie beispielsweise des Typs 2.

Fig. 1b zeigt den in Fig. 1a gezeigten Ladestecker 100 in einer Detailansicht, wobei das Gehäuse 10 aufgeschnitten ist, um so den Blick auf dessen Innenleben freizugeben. Der Kontaktträger 16 ist dabei durch eine Vergussmasse 18 ausgefüllt. Auf der im Steckkörper 1 befindlichen Seite des Kontaktträgers 16 verlaufen die Litzen bzw. Kabel, insbesondere die zu den Leistungskontakten 13 zugehörigen Leistungskabel 132, zu den jeweiligen Kontakten 13, 14, 15, welche auf der anderen Seite des Kontaktträgers 16 aus diesem hinausragen. Die Kabel werden dabei in dem Gehäuse 10 gebündelt und führen zur Ladesäule (nicht dargestellt).

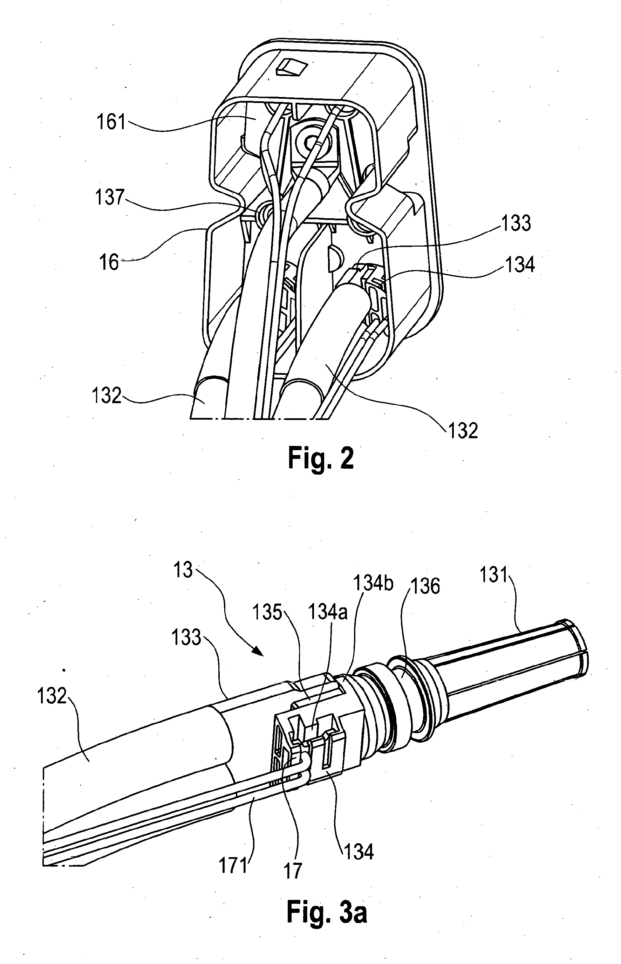

Fig. 2 zeigt eine Detailansicht des Kontaktträgers 16 in einer anderen Perspektive, wobei sowohl auf die Darstellung des Gehäuses 10 als auch der Vergussmasse 18 im Vergleich zu Fig. 1b verzichtet wurde. Im Kontaktträger 16 ist eine Halteklammer 161 vorgesehen, welche die unterschiedlichen Kontakte fixiert und mit dem Kontaktträger 16 verbindet. Dabei wird die Halteklammer 161 an dem Kontaktträger 16 durch Schrauben 137 angeschraubt. Es sind dabei ebenfalls andere Arten der Befestigung denkbar.

Durch die Verwendung der Halteklammer 161 werden die einzelnen Kontakte 13, 14, 15 also an ihren Positionen in dem Kontaktträger 16 befestigt. Die Halteklammer 161 umschließt dabei zumindest die Leistungskontakte 13 an einer dafür vorgesehenen Nut 136. Zwischen Halteklammer 161 und Kontaktträger 16 ist eine Dichtung vorgesehen, um den Eintritt von Feuchtigkeit in den Kontaktträger zu verhindern.

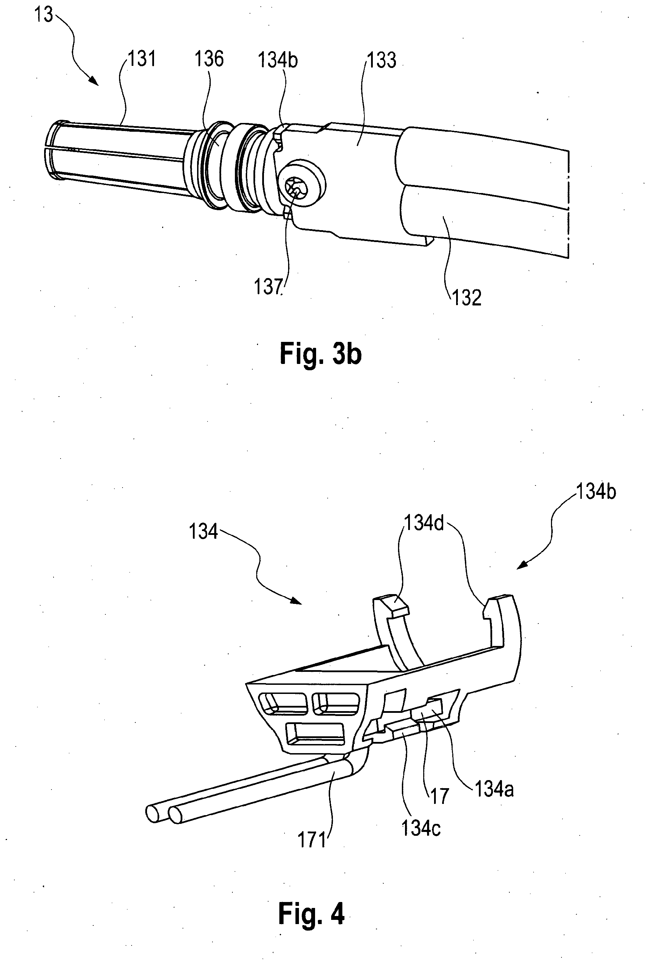

Fig. 3a und Fig. 3b zeigen weiterhin jeweils eine Detailansicht eines Leistungskontakts 13, wie er in den Figuren 1a, 1b, und 2 vorgesehen ist, aus unterschiedlichen Perspektiven. Der Leistungskontakt 13 weist dabei einen Kontaktabschnitt 131 auf, welcher auf der einen Seite des Kontaktträgers 16 aus diesem heraussteht und dazu ausgebildet ist in das Steckgesicht 2 des Ladesteckers 100 eingesetzt zu werden. Über den Kontaktabschnitt 131 erfolgt im angesteckten Zustand des Ladesteckers 100 der Stromfluss und damit die Übertragung der elektrischen Energie. Weiterhin weist der Leistungskontakt 13 eine Nut 136 auf, welche dazu ausgebildet ist von der Halteklammer 161 umschlossen zu werden, um den Leistungskontakt 13 im Kontaktträger 16 zu positionieren.

Weiterhin ist am Leistungskontakt 13 ein Sensorträger 134 vorgesehen, welcher an einer Kontaktfahne 135 vorgesehen und daran mittels Formschluss durch eine Halterung 134b befestigt ist. In dem Sensorträger 134 ist ein Sensor 17 in Form eines Temperatursensors vorgesehen, welcher dazu ausgebildet ist, die Temperatur des Leistungskontakts 13, insbesondere der Kontaktfahne 135 zu erfassen. Ferner ist an der Kontaktfahne 135 eine Schweißfahne 133 durch eine Schraube 137 befestigt. Es sind ebenfalls Ausführungsformen der Erfindung denkbar, bei denen eine andere Befestigung der Schweißfahne 133 an der Kontaktfahne 135 erfolgt. Ebenfalls sind Ausführungsformen der Erfindung denkbar, bei denen die Leistungskabel 132 direkt an dem Leistungskontakt 13 befestigt werden. Die Schweißfahne 133 ist mit entsprechenden Leistungskabel 132 verbunden, wobei die Leistungskabel 132 vorzugsweise auf die Schweißfahne 133 aufgeschweißt werden, Als Schweißfahne 133 wird im Rahmen der Anmeldung ein Element verstanden, welches dazu ausgebildet ist, eine elektrische Verbindung zwischen dem Leistungskontakt 13 und den Leistungskabel 132 herzustellen.

Der Sensor 17 ist mit zwei Sensorkabel 171 verbunden, welche parallel zu den Leistungskabel 132 verlaufen und dazu ausgebildet sind, die vom Sensor 17 erfassten Daten an eine entsprechende Auswerteeinheit zu übermitteln.

Der Sensorträger 134 wird in Fig. 4 detailliert dargestellt und im Folgenden näher erläutert. Der Sensorträger 134 weist eine Tasche 134a auf, in der der Sensor 17 angeordnet ist. Als Tasche 134a wird im Rahmen der Anmeldung ein Element verstanden, das den Sensor 17 durch Formschluss aufnehmen kann. Hierfür ist wie in Fig. 4 gezeigt ein Rastelement 134c vorgesehen, welches den Formschluss nach dem Einsetzen des Sensors 17 in der Tasche 134a herstellt. Aus der Tasche 134a werden die Sensorkabel 171 herausgeführt.

Die Halterung 134b des Sensorträgers 134 weist weiterhin zwei Rastnasen 134d auf, welche die formschlüssige Befestigung an dem Leistungskontakt 13 ermöglichen. Dazu umschließen die Rastnasen 134d wie in Fig. 3a, 3b gezeigt die Kontaktfahne 135 und stellen in der Endposition den Formschluss her. Der Sensorträger 134 kann somit an die Kontaktfahne 135 geclipst werden.

Durch den dargestellten Sensorträger 134 kann sichergestellt werden, dass stets ein konstanter Abstand zwischen Kontaktfahne 135 und Sensor 17 vorliegt. Vorzugsweise ist der Sensorträger 134 und die Kontaktfahne 135 dabei so ausgebildet, dass der Sensor 17 die Kontaktfahne 135 berührt. Durch die definierte Position des Sensors 17 direkt am Leistungskontakt und dem konstant gleichen Abstand kann die Qualität der Messung durch den Sensor 17 im Vergleich zum Stand der Technik deutlich verbessert werden.

In der dargestellten Ausführungsform weist der Sensorträger 134 an der der Kontaktfahne zugeneigten Seite eine Aushöhlung auf. Es ist dabei ebenso eine Ausführungsform der Erfindung denkbar, bei der der Sensorträger 134 diese Aushöhlung nicht aufweist, sondern flach ausgeführt ist. Dabei ist der Zwischenraum zwischen Sensor 17 und Kontaktfahne vorzugsweise vollständig durch das Material des Sensorträgers 134 ausgefüllt. Kontaktfahne 135 und Sensorträger 134 sind vorzugsweise derart ausgeführt, dass sie direkt aneinander anliegen und zwischen ihnen keine Luft vorgesehen ist.

Die Vergussmasse 18 (siehe Fig. 1b) ist dabei dazu vorgesehen die im Kontaktträger 16 befindlichen Elemente, wie den Sensor 17, den Sensorträger 134, die Schweißfahne 133 und die Kabel der Kontakte sicher zu befestigen. Dabei sind keine Luftkammern in der Vergussmasse 18 vorgesehen, welche die Messung durch eine ungleichmäßige Leitung der Temperatur beeinflussen könnten. Somit kann durch die Vergussmasse 18 eine gute Wärmeleitfähigkeit der Temperatur des Leistungskontakts 13 zum Sensor 17 sichergestellt werden. Die Vergussmasse 18 und der Dimensionierung des Kontaktträgers 16 sind dabei derart vorgesehen, dass lediglich die Kabel der Kontakte aus der Vergussmasse 18 in das Gehäuse 10 des Ladesteckers 100 reichen. Durch die fixierte Position des Sensors 17 in Bezug auf den Leistungskontakt 13 und den Ausschluss von Luftkammern kann die Qualität der Messung durch den Sensor 17 deutlich verbessert werden und es kommt weniger häufig zu Fehlmessungen, welche ein Laden mit dem Ladestecker 100 fälschlicherweise verhindern.

### Bezugszeichenliste

- 100: Ladestecker
- 1: Steckkörper
- 10: Gehäuse
- 11: Griff
- 12: Sicherungsmechanismus
- 121: Entsicherungselement
- 13: Leistungskontakt
- 131: Kontaktabschnitt
- 132: Leistungskabel
- 133: Schweißfahne
- 134: Sensorträger
- 134a: Tasche
- 134b: Halterung
- 134c: Rastelement
- 134d: Rastnasen
- 135: Kontaktfahne
- 136: Nut
- 137: Schraube
- 14: Steuerkontakt
- 15: Schutzkontakt
- 16: Kontaktträger
- 161: Halteklammer
- 17: Sensor
- 171: Sensorkabel
- 18: Vergussmasse
- 2: Steckgesicht

## Patentansprüche

1. Ladestecker (100) zum Aufladen einer Batterie, aufweisend wenigstens einen Leistungskontakt (13), welcher dazu ausgebildet ist, Strom an die Batterie zu übertragen, wobei der Leistungskontakt (13) eine Kontaktfahne (135) aufweist,
einen Kontaktträger (16), in dem der Leistungskontakt (13) zumindest teilweise angeordnet ist, und
wenigstens ein Sensorträger (134), welcher dazu ausgebildet ist, einen Sensor (17) in einer dafür vorgesehenen Tasche (134a) - aufzunehmen und derart ausgebildet und angeordnet ist, dass der Sensor (17) in einem definierten Abstand zum Leistungskontakt (13) positioniert ist.

2. Ladestecker (100) gemäß dem vorhergehenden Anspruch, wobei der Sensorträger (134) an dem Leistungskontakt (13) selbst, insbesondere der Sensorfahne, angeordnet ist.

3. Ladestecker (100) gemäß einem der vorhergehenden Ansprüche, wobei der Sensorträger (134) derart ausgebildet und angeordnet ist, dass der Sensor (17) direkt mit dem Leistungskontakt (13), insbesondere der Sensorfahne (135), in Kontakt steht.

4. Ladestecker (100) gemäß einem der vorhergehenden Ansprüche, wobei der Sensorträger (134) durch einen Formschluss an der Sensorfahne (135) befestigt ist.

5. Ladestecker (100) gemäß dem vorhergehenden Anspruch, wobei der Formschluss durch zwei die Sensorfahne (134) zumindest teilweise umfassende Rastnasen (134d) gebildet ist.

6. Ladestecker (100) gemäß einem der vorhergehenden Ansprüche, wobei der Sensor (17) durch einen Formschluss in der Tasche angeordnet ist.

7. Ladestecker (100) gemäß einem der vorhergehenden Ansprüche, wobei der wenigstens eine Leistungskontakt (13) in dem Kontaktträger (16) durch eine im Kontaktträger (16) verschraubte Halteklammer (161) fixiert ist.

8. Ladestecker (100) gemäß einem der vorhergehenden Ansprüche, wobei der Sensorträger (134) innerhalb des Kontaktträgers (16) angeordnet ist und der Kontaktträger (16) durch eine Vergussmasse (18) ausgespritzt ist und die im Kontaktträger (16) angeordneten Elemente fixiert.

9. Ladesäule aufweisend einen Ladestecker (100) gemäß einem der vorhergehenden Ansprüche.
